(19) **Europäisches Patentamt**
**European Patent Office**
**Office européen des brevets**

(11) **EP 1 384 912 B1**

(12) **EUROPEAN PATENT SPECIFICATION**

(45) Date of publication and mention
of the grant of the patent:
**03.10.2007 Bulletin 2007/40**

(51) Int Cl.:
**F16D 48/06** (2006.01)

(21) Application number: **03017111.0**

(22) Date of filing: **28.07.2003**

(54) **Clutch control device**

Kupplungssteuerungvorrichtung

Dispositif de commande pour embrayage

(84) Designated Contracting States:
**AT BE BG CH CY CZ DE DK EE ES FI FR GB GR HU IE IT LI LU MC NL PT RO SE SI SK TR**

(30) Priority: **26.07.2002 JP 2002218089**

(43) Date of publication of application:
**28.01.2004 Bulletin 2004/05**

(73) Proprietor: **AISIN SEIKI KABUSHIKI KAISHA Kariya-shi, Aichi-ken (JP)**

(72) Inventors:
• **Aikawa, Akira**
**Aichi-gun,**
**Aichi-ken (JP)**

• **Terakawa, Tomomitsu**
**Anjo-shi,**
**Aichi-ken (JP)**
• **Mineno, Akira**
**Kariya-shi,**
**Aichi-ken (JP)**
• **Nagasaka, Yasumitsu**
**Chita-gun,**
**Aichi-ken (JP)**

(74) Representative: **TBK-Patent**
**Bavariaring 4-6**
**80336 München (DE)**

(56) References cited:
**WO-A-00/53945          DE-A- 3 028 250**
**DE-A- 3 043 348          DE-A- 3 116 455**
**US-A- 4 646 891**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF THE INVENTION

This invention generally relates to a clutch control device. More particularly, the present invention pertains to a clutch control device, which changes an engaging condition between a clutch disc and a wheel driving an actuator.

BACKGROUND OF THE INVENTION

An automated manual transmission system is known which uses an actuator installed in an existing manual transmission for automatically performing a series of speed change operations such as clutch engagement/disengagement, gear shifting or a gear selecting based on a driver's intention and/or a vehicle condition.
A friction clutch in such system changes the diaphragm spring position in accordance with the wear of a clutch facing (clutch disc), which may lead to increase of a necessary operation force for disengaging the clutch, i.e., a clutch release load. Accordingly, in order to solve the problem, the compensation mechanism for compensating the wear of the clutch facings has been adopted for such system.
Meanwhile, the amount of the wear on the clutch facings has to be precisely detected to appropriately compensate the wear of the clutch facings. It is preferable to actually measure the wear amount for accurate detection, but such actual measurement is costly and not realistic.
Further, document WO 00/53945 A describes a control apparatus for a coupling means like a clutch or a brake, wherein an assisting force is changed depending on a wear of the coupling means. The wear of the coupling means is measured based on current used by an electric motor for moving the coupling means. A predetermined current difference in a drive means is detected between its way there for getting from a first limit position to the second limit position and its way back for getting from its second limit position to its first limit position.

Summary of the invention

The object of the invention is to provide a clutch control device which is able to estimate a wear amount of a clutch facing more precisely and in a simple manner.
This object is achieved by a clutch control device having the features of claim 1.
Further advantageous developments are described in the dependent claims.

BRIEF DESCRIPTION OF THE DRAWINGS

The foregoing and additional features and characteristics of the present invention will become more apparent from the following detailed description considered with reference to the accompanying drawing figures in which like reference numerals designate like elements and wherein:

Fig.1 illustrates a diagram of a system in which a clutch control device is employed in accordance with the present invention;

Fig.2 illustrates a cross-sectional view of the control device which is illustrated in Fig.1;

Fig.3 illustrates a front view of the control device which is illustrated in Fig.1;

Figs.4 (a), 4(b), 4(c), and 5 illustrate operations of the clutch control device which is illustrated in Fig.1;

Fig.6 illustrates flowchart of programs to be executed by CPU which is illustrated in Fig.1;

Fig.7 is similar to Fig. 6, but showing a sequel process of the Fig.6;

Figs.8 illustrates a graph which indicates the clutch stroke and the indicated current value during a test or the wear estimation;

Fig.9 illustrates hysteresis of the motor load;

Fig. 10 illustrates a transition of the clutch stroke and the indicating current value with or without the annealing process;

Fig.11 illustrates a flowchart of the program executed by the CPU in Fig.1;

Fig.12 (illustrates graphs which indicate progresses of the load estimating value with or without the annealing process

Fig.13 illustrates pattern diagrams explaining progresses of the load judge counter;

Fig.14 illustrates a graph which indicates a characteristic of the load engaging the clutch disc; and

Fig. 15 illustrates a graph which indicates a relationship between the wear amount and the load change value.

## DETAILED DESCRIPTION OF THE PRESENT INVENTION

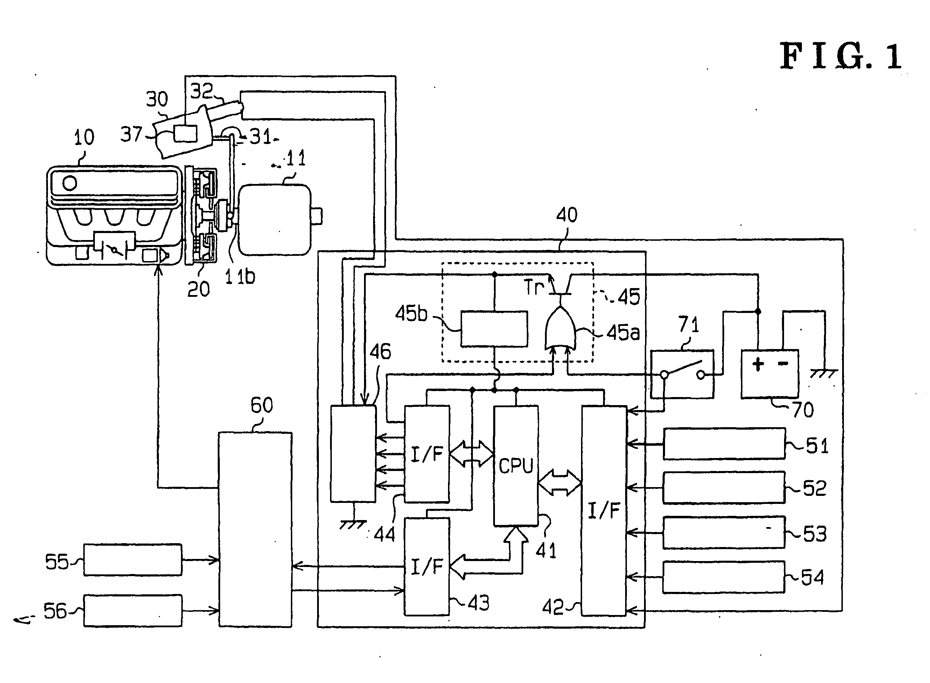

Referring now to an embodiment of the clutch control device of the present invention with reference to the attached drawings, Fig. 1 through Fig. 13.

The clutch control device, shown schematically in Fig. 1, is comprised of an engine 10, a transmission 11, a friction clutch 20, an actuator 30 and a clutch control circuit 40. The engine 10 and the transmission 11 form a drive source, and the friction clutch 20 is provided between the engine 10 and the transmission 11. The actuator 30 operates the friction clutch 20, and a clutch control circuit 40 outputs a drive signal to the actuator 30.

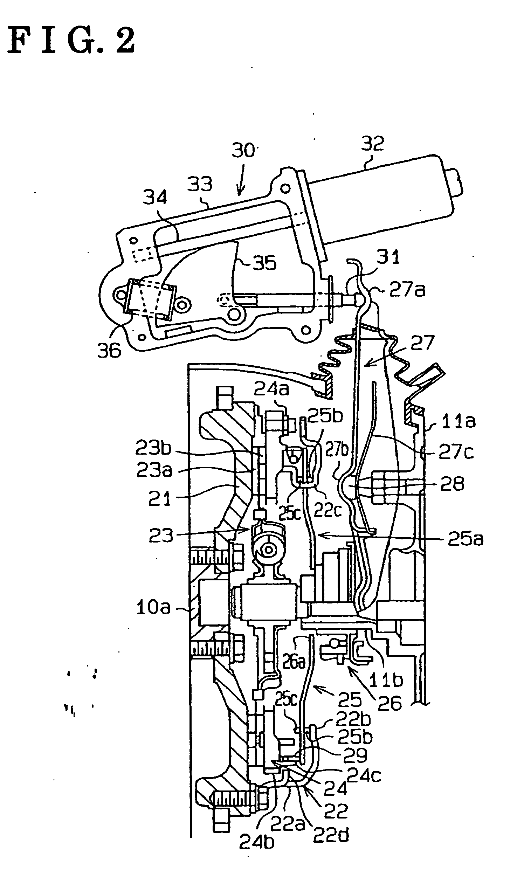

As shown in Fig. 2 in detail, the friction clutch 20 includes the following main components; a flywheel 21, a clutch cover 22, a clutch disc 23, a pressure plate 24, a diaphragm spring 25, a release bearing 26, a release fork 27, a pivot support member 28 fixed to a transmission case 11a and an adjusting wedge member 29. In addition, a pressure plate 24, the diaphragm spring 25, the release fork 27 and the like are also called a clutch cover assembly (assembly) because they are integrally built to the clutch cover 22.

The flywheel 21, a cast-iron disc, is fixed with bolts to a crankshaft (output shaft of the drive source) 10a in the engine 10, set to rotate integrally with the crankshaft 10a.

The clutch cover 22, with an approximately cylindrical form, includes a cylindrical portion 22a, a flange portion 22b, plural holding portions 22c and a pressure plate stopper portion 22d.

The flange portion 22b is formed on the inner side of a peripheral surface of the cylindrical portion 22a, and plural holding portions 22c are formed on the edge of inner peripheral surface at equal intervals in a peripheral direction, and a pressure plate stopper portion 22d is inwardly bended from the cylindrical portion 22a.

The clutch cover 22 rotates with the flywheel 21 integrally fixed to the flywheel 21 with bolts at the outer portion of a peripheral surface of the cylindrical portion 22a.

The clutch disc 23, i.e., a friction plate for transmitting engine power from the engine 10 to the transmission 11, is provided between the flywheel 21 and the pressure plate 24 and is movable in axial direction by a spline joining with an input shaft of the transmission 11 at the central part thereof. In addition, clutch facings 23a and 23b, made of friction member, are riveted to both sides of the outer peripheral surface of the clutch disc 23.

The clutch disc 23 is disposed between the flywheel 21 and the pressure plate 24 pressing the clutch disc 23 toward the flywheel 21 and makes the clutch disc 23 rotating integrally with the flywheel 21.

The pressure plate 24 is connected to the clutch cover 22 with a strap 24a and is rotatable in response to rotation of the clutch cover 22.

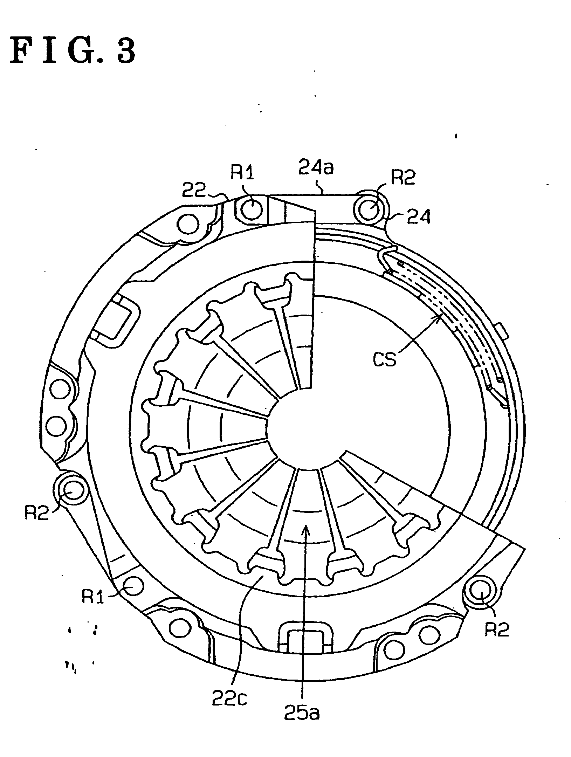

The strap 24a includes laminated plural thin blade spring members, as shown in the Fig. 3, and the end of the strap is fixed to the outer peripheral surface portion of the clutch cover 22 with a rivet R1. The other end of the strap is fixed to a projecting portion provided on the outer peripheral portion of the pressure plate 24 with a rivet R2. Thus, the strap 24a applies a biasing force to the pressure plate 24 in the axial direction so that the flywheel 21 is separated from the pressure plate 24.

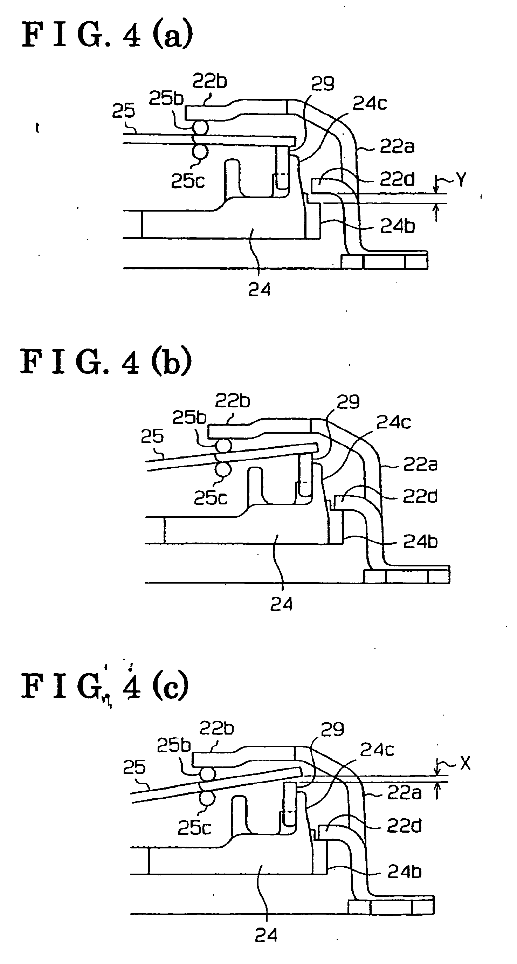

As shown in Fig. 2 and Fig. 4, a contact portion 24b is provided at the outer most peripheral portion of the pressure plate 24 abutting to the pressure plate stopper portion 22d of the clutch cover 22 when the pressure plate 24 moves by a predetermined distance in the direction of the diaphragm spring 25.

A guide portion 24c is provided in the direction of the diaphragm spring 25 on the inner side of the peripheral surface of the contact portion 24b.

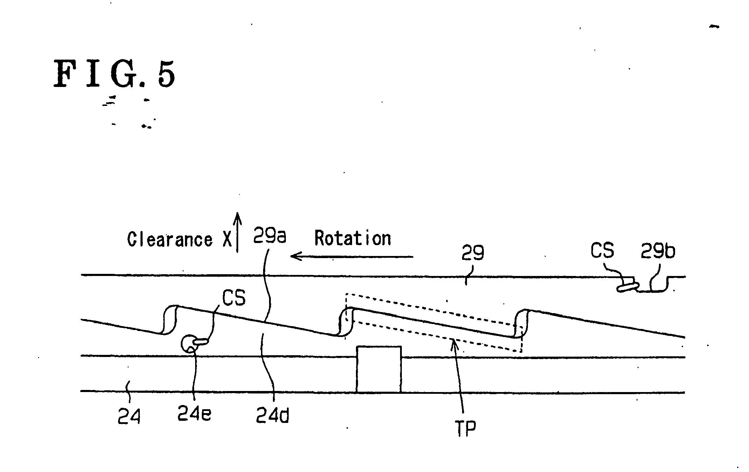

As shown in Fig. 5, a serration tapered portion 24d is provided in the direction of the diaphragm spring 25 on the inner side of the peripheral surface of the guide portion 24c.

As also shown in Fig. 3, the diaphragm spring 25 includes plural (twelve) elastic plate members (lever member 25a) provided radially along the inner peripheral surface of the cylindrical portion 22a of clutch cover 22.

As shown in Fig. 2, each lever member 25a is held at the holding portion 22c of the clutch cover 22 through a pair of ring-shaped supporting members 25b and 25c provided at both sides of each lever member 25a in the axial direction. Thus, the lever member 25a is pivotally movable relative to the clutch cover 22 via each of supporting members 25b and 25c.

The adjusting wedge member 29 is provided between the tapered portion 24d of the pressure plate 24 and an outer peripheral portion of the diaphragm spring 25.

The adjusting wedge member 29, a ring-shaped member, includes a wedge side tapered portion 29a whose form is same as the tapered portion 24d as shown in Fig.5

The wedge side tapered portion 29a and the tapered portion 24d are in contact with each other at a taper surface TP.

In addition, one side of the adjusting wedge member 29, which is facing the diaphragm spring 25 (upper side of the adjusting wedge member 29 in Fig. 5) is flat.

The adjusting wedge member 29 forms a force transmitting route between the pressure plate 24 and the diaphragm spring 25 and transmits a force which are applied to and generated at the diaphragm spring 25 to the pressure plate 24.

A recess 29b is provided on an appropriate position of the adjusting wedge member 29 faced to the diaphragm spring 25, and a through-hole 24e is provided on an appropriate position of the tapered portion 24d of the pressure plate 24. In addition, each one end of the tensioned coil spring CS is engaged with each of the recess 29b and the through-hole 24e respectively.

Thus, a force is applied to the pressure plate 24 and the adjusting wedge member 29 in the direction that each top portion of the tapered portion 24d and the wedge side tapered portion 29a approaches each other. Thus, the pressure plate 24 and the adjusting wedge member 29 rotate relatively

The release bearing 26 is slidably supported on a support sleeve 11b. The support sleeve 11b is supported by the transmission case 11a surrounding an outer peripheral of the input shaft of the transmission 11.

In addition, the release bearing 26 includes a power point 26a, which is used to press an inner end portion of the lever member 25a (a center portion of the diaphragm spring 25) in the direction of the flywheel 21.

The release fork 27 (a fork member) is used for sliding the release bearing 26 in the axial direction depending on an operation of the actuator 30. One of the end portions of the release fork 27 is in contact with the release bearing 26, and the other end is in contact with the end portion of the rod 31 of the actuator 30 and a contact portion 27a.

In addition, the release fork 27 is assembled to the pivot support member 28 with a spring 27c which is fixed to the transmission case 11a, so that the release fork 27 is rotatable approximately at a center point 27b of the release fork 27 via the pivot support member 28.

The actuator 30, moves the rod 31 back and forth, and includes an electric motor 32 and a housing 33.

The electric motor 32 is of a direct current drive type, and a housing 33 is fixed to suitable places of a vehicle supporting the electric motor 32.

A rotating shaft 34 driven by the electric motor 32, a sector gear 35, and an assist spring 36 are accommodated in the housing 33.

A sector gear 35, having a sector shape viewed in side direction, is supported by the housing 33 for pivotal movement relative to the housing 33.

A worm gear is formed on the rotating shaft 34 and meshes with an arc side of the sector gear 35. In addition, base end portion of the rod 31 (opposite to the contact end with the release fork 27) is movably supported by the sector gear 35.

Thus, rotations of the electric motor 32 leads rotations of the sector gear 35, then the rod 31 can be movable back and forth relative to the housing 33.

The assist spring 36 is compressed within the range of the pivotal movement of the sector gear 35. One end of the assist spring 36 is engaged with a rear end of the housing 33 and the other end of the assist spring 36 is engaged with the sector gear 35.

Thus, the assist spring 36 urges the sector gear 35 in clockwise direction when the sector gear 35 rotates equal to or more than a predetermined angle in clockwise direction in Fig. 2. As a result, the assist spring 36 assist the rightward movement of the rod 31 by the electric motor 32.

Again, Fig. 1 shows the clutch control circuit 40 including a CPU (microcomputer) 41, interface 42 through 44, a supply circuit 45 and a driving circuit 46. The CPU 41 houses ROM, RAM and EEPROM memorizing a program and a map etc., which will be described later.

The interface 42 is connected to the CPU 41 via a bus. The interface 42 is also connected to a shift lever load sensor 51, a vehicle speed sensor 52, a gear shift position sensor 53, a transmission input shaft rotation number sensor 54 and a stroke sensor 37.

The shift lever load sensor 51 detects load which is generated upon transmission shift lever operation (shift lever load). The vehicle speed sensor 52 detects a vehicle speed V. The gear shift position sensor 53 detects an actual gear shift change. The transmission input shaft rotation number sensor 54 detects the rotation number of the input shaft 11c of the transmission 11. The stroke sensor 37 is fixed to the actuator 30 and detects a stroke (clutch stroke ST) of the rod 31 by measuring the rotational angle of the sector gear 35. The interface 42 supplies detection signals to the CPU 41.

The interface 43 is connected via a bus to the CPU 41 and also connected to an engine control device 60 for reciprocable communication. Thus, the CPU 41 of the clutch control circuit 40 receives information from a throttle opening degree sensor 55 and an engine rotation number sensor 56 input by the engine control device 60.

The interface 44 is connected via a bus to the CPU 41 as well as to one input terminal of an OR circuit 45a of the power supply circuit 45 and the driving circuit 46. Thus, predetermined signals are sent to the power supply circuit 45 and the driving circuit 46 according to commands from the CPU 41.

The power supply circuit 45 includes the OR circuit 45a, a power transistor Tr whose base is connected to an output terminal of the OR circuit 45a and a constant voltage circuit 45b.

A collector of the power transistor Tr is connected to a plus terminal of an on vehicle battery 70 and an emitter of the power transistor Tr is connected to the constant voltage circuit 45b and the driving circuit 46.

Thus power is supplied to the above circuits when the power transistor Tr is turned on.

The constant voltage circuit 45b is adapted to convert the battery voltage to a predetermined constant voltage (5 volts) and connected to the CPU 41 and the interfaces 42 through 44 so as to supply power thereto.

One terminal of an ignition switch 71 which is for On/Off operation by a driver is connected to the other input terminal of the OR circuit 45a. The other terminal of the ignition switch 71 is connected to the plus terminal of the battery 70. The terminal of the ignition switch 71 connected to the OR circuit 45a is also connected to the interface 42, so that the CPU 41 can detect the On/Off state of the ignition switch 71.

The driving circuit 46 accommodates four switching elements (not shown) which are for On/Off operation in response to an command signal which comes from the interface 44.

These switching elements include a known bridge circuit and are selectively turned on with their On periods being controlled. Thus, the driving circuit 46 supplies a certain electric current to the electric motor 32 for rotations in a predetermined direction or in a opposite direction.

In other words,' a predetermined current is supplied to the electric motor 32 for driving according to command signals which is based on an value (motor indicating current value clti) indicated by the CPU 41 and sent via the driving circuit 46.

The engine control device 60 mainly including a microcomputer (not shown) controls fuel injection and ignition timing of the engine 10.

As explained above, the engine control device 60 is connected to the throttle opening degree sensor 55 for detecting a throttle opening TA of the engine 10 and the engine rotation number sensor 56 for detecting a rotation number NE of the engine 10. As a result, the engine control device 60 executes inputting/processing operation for the signals which come from the respective sensors.

In the clutch control device constructed as above, the actuator 30 executes automatically a clutch engaging/disengaging operation, instead of a conventional driver's clutch pedal operation.

In other words, the clutch engaging/disengaging operations is made when the CPU 41 detects any one of the following conditions:

(1) the vehicle shifts from a traveling condition to stopping condition (rotational speed of the input shaft of the transmission has decreased and become equal to or less than a predetermined value.);
(2) the load detected by the shift lever load sensor 51 has increased and become equal to or more than the predetermined value (the driver's intention to shift a gear has been confirmed); and (3) an accelerator pedal is stepped on when the vehicle is halted.

An operation of the clutch control device while the clutch is engaged for transmitting the power to the engine 10 to the trasmission11 is explained.

First, the driving circuit 46 supplies a predetermined current to the electric motor 32 depending on command signals from the clutch control circuit 40 to rotate the electric motor 32.

Thus, the sector gear 35 rotates in the anticlockwise direction in Fig. 2, so that the rod 31 moves in the leftward direction.

On the other hand, the release bearing 26 is applied a force by the diaphragm spring 25 in a direction urging the release bearing 26 to moved away from the flywheel 21 (rightward in Fig. 2).

The force is transmitted via the release bearing 26 to the release fork 27 and urges the release fork 27 to rotate in the anticlockwise direction in Fig.2 via the pivot support member 28.

Thus, the rod 31 moves in the leftward direction in Fig. 2, and the release fork 27 makes a pivotal movement in the anticlockwise direction, at the same time, a center portion of the diaphragm spring 25 moves in the direction which the diaphragm spring 25 moves away from the flywheel 21.

At this time, the diaphragm spring 25 pivots (changing its position) via the supporting members 25b and 25c, so that the adjusting wedge member 29 engaging with the outer periphery of the diaphragm spring 25 moves in the direction of the flywheel 21.

As a result, the pressure plate 24 is applied a force which urges the pressure plate 24 toward the flywheel 21 via the tapered portion 24d, and then the clutch disc 23 is sandwiched in between the flywheel 21 and the pressure plate 24.

Thus, the clutch disc 23 is in engaged with the flywheel 21 and rotates integrally with the flywheel 21, as a result, the clutch disc 23 transmits a force from the engine 10 to the transmission 11.

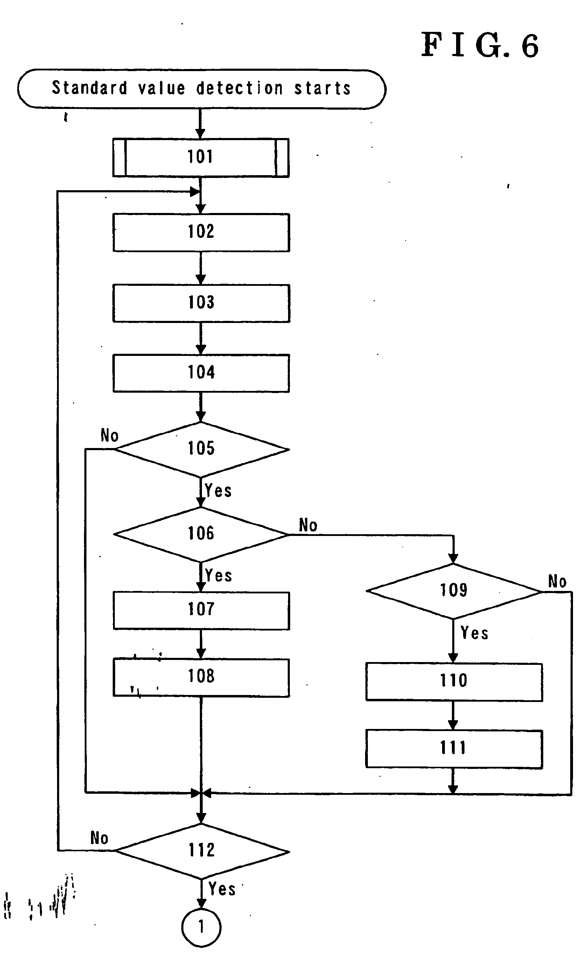

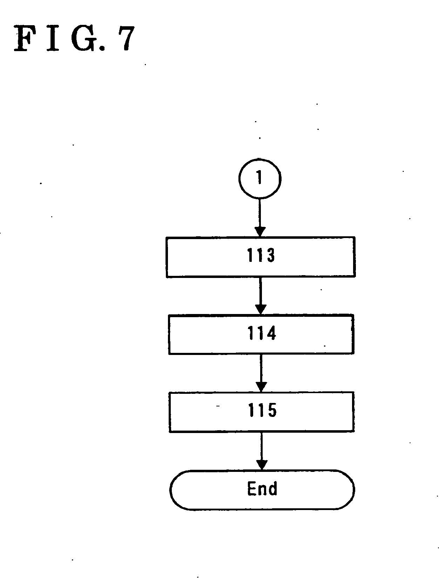

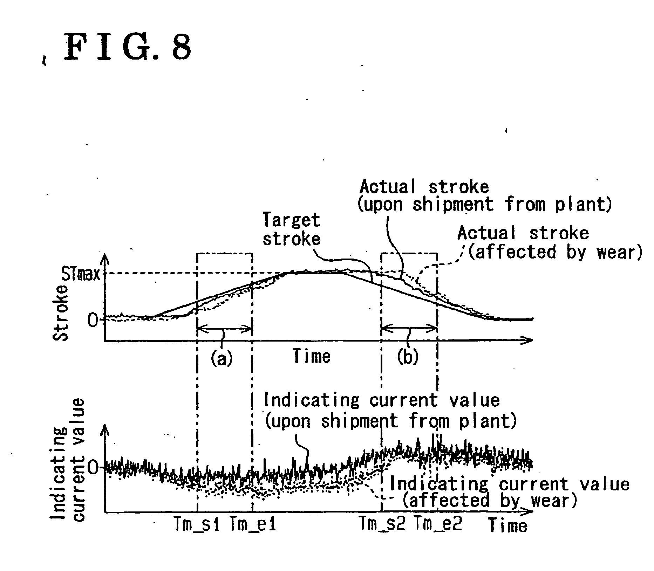

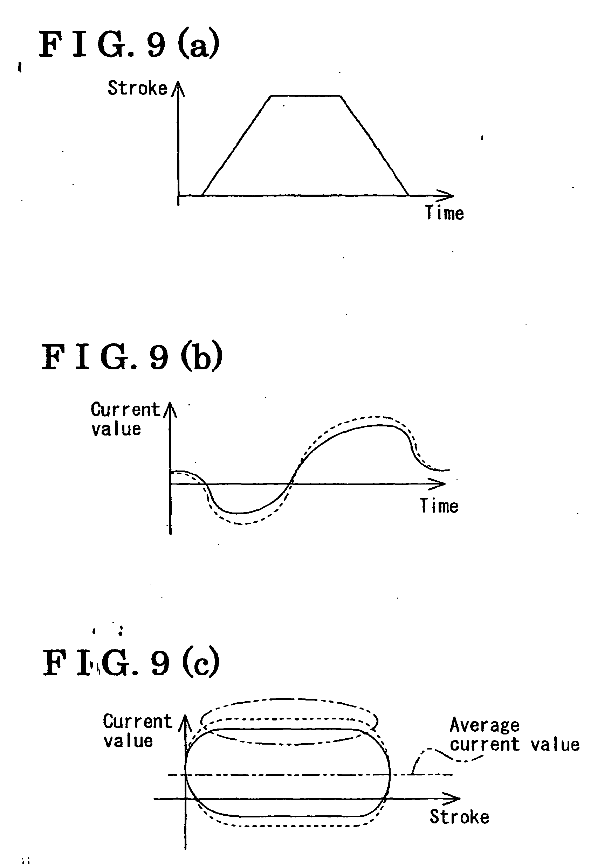

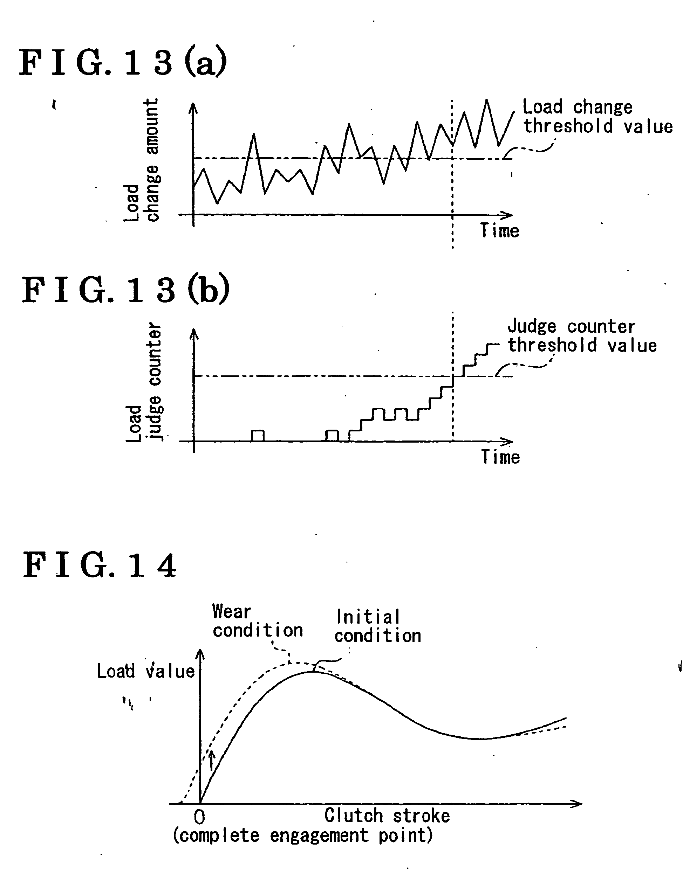

An operation while a load is not transmitted from the engine 10 to the transmission 11 in clutch disengaging condition is explained. Thus, the sector gear 35 rotates in the anticlockwise direction in Fig. 2, so that the rod 31 moves in the leftward direction.
First, the sector gear 35 is rotated in the clockwise direction in Fig.2 by driving the electric motor 32.
Thus, the rod 31 moves in the rightward direction in Fig.2 and applies a rightward load to the contact portion 27a of the a release folk 27, so that the release fork 27 rotates via the pivot support member 28 in the rightward direction in Fig. 2, and the release bearing 26 is moved toward the flywheel 21.
Thus, the diaphragm spring 25 is applied a force in the direction of the flywheel 21 at the power point 26a and pivots (changing its position) around the supporting members 25b and 25c as a fulcrum point. Then, the outer peripheral portion of the diaphragm spring 25 moves away from the flywheel 21, so that the force which is applied to press the pressure plate 24 via the adjusts wedge member 29 in the direction of the flywheel 21 is reduced.
On the other hands, the pressure plate 24 is connected to the clutch cover 22 with the strap 24a and is always biasing the pressure plate 24 in the direction of moving away from the flywheel 21. Accordingly, the pressure plate 24 moves slightly away from the clutch disc 23 by the biasing force of the strap 24a. As a result, the clutch disc 23 becomes free condition, and a force in the engine 10 is not transmitted to' the transmission 11.
A shown in Fig. 4 (a), when the clutch is to be disengaged during regular vehicle operation, a clutch stroke ST controlled to a value ST0 so as to maintain a predetermined distance Y between the contact portion 24b of the pressure plate 24 and the pressure plate stopper portion 22d of the clutch cover.
Next, the wear estimation process of the clutch facings 23a and 23b (the clutch disc 23) will be explained. In this operation, the wear on the clutch facings 23a and 23b is estimated by using a standard load value of the clutch, which is detected and registered upon shipment from the assembly plant.
The standard load value is a load which is needed to move away the pressure plate 24 from the flywheel 21 in predetermined condition
A current wear of the clutch facings 23a and 23b is estimated comparing the standard load value to an after-mentioned load value which is detected when the clutch is used after shipment.
First of all, detection and register of the standard load value will be explained referring to flowcharts in Fig. 6 and Fig. 7, which will be executed after a assembling of the actuator 30 etc. at the assembly plant. An actual stroke (clutch stroke) of the rod 31 is set in the condition (position) applying slightly a force via the release fork 27 (contact portion 27a) right after the assembling of the actuator 30 at the assembly plant. Thus, the clutch disc 23 substantially engages with the flywheel 21, so that the clutch disc 23 rotates integrally with the flywheel 21. If a clutch stroke ST is detected while the routine in Fig.6 is executed, the detected clutch stroke ST at the first step is established and registered to the EEPROM as a complete engaging point being an original point (value [0]). In other words, the CPU 41 controls a following clutch stroke based on the complete engaging point which is an absolute standard.
If the process goes to the routine, the CPU 41 starts to clock a calculation timer Tm initializing various data at Step 101. Next, the CPU 41 goes to Step 102 and regulates the clutch stroke (ST) to a target clutch stroke. Specifically, the CPU 41 outputs the motor indicating current value clti in accordance of a comparison between the established target clutch stroke and the detected clutch stroke ST.
A graph in Fig. 8 explains the target clutch stroke, the detected clutch stroke ST in this regulation and the motor indicating current value clti at this moment as time go on. In the graph, each data (the clutch stroke ST and the motor indicating current value clti) upon shipment from the assembly plant and upon the wear estimation (mentioned later) are also shown for convenience. As shown in Fig. 8, the target clutch stroke is increased gradually in approximate proportion from the value [0] (complete engaging point) to the predetermined maximum target clutch stroke STmax as time go on, then the target clutch stroke is decreased gradually to the value [0] in approximate proportion.
In addition, the maximum target clutch stroke Stmax is set near the complete engaging point, and the predetermined set is enough smaller than a clutch stroke when the pressure plate 24 completely moves away from the flywheel 21.
The predetermined set is for the wear estimation on the clutch facings 23a and 23b near the complete engaging point wherein a range of the load change is the largest. (Fig. 14). Thus, dispersion of the wear estimation is prevented, so that the precision of the wear estimation is improved. The CPU 41 controls to match the target clutch stroke with the actual clutch stroke.
In addition, the target clutch stroke gradual increases and decreases of in approximate proportion in order to control a change speed of the clutch stroke (ST) to be constant, in other words, controlling a rotation number of the electric motor 32 to be constant.
As a result, a motor load of the electric motor 32 is calculated easily based on the current value (the motor indicating current value clti).
In addition, changing the target clutch stroke reciprocally as a pair gradual increasing/decreasing movement results in reciprocating drive of the electric motor 32 to execute the clutch engaging/disengaging movements.
As shown in Fig. 9 (a) and (b), the motor load has a hysteresis, and one-way direction drive (disengaging direction i.e., outward direction, or engaging direction i.e., inward direction) of the electric motor 32 causes friction changes, so that the current value (the motor indicating current value) fluctuates. As a result, the estimation of the motor load has errors. The target clutch stroke is changed reciprocally. As a result, The reciprocating current values is detected and averaged for the motor load estimation without the hysteresis,

As shown in Fig. 9 (c), detecting current value on reciprocating movement and averaging the value prevents the effect of the hysteresis on the current value (average current value) as a whole even if the hysteresis changes.

Thus, the motor load is estimated eliminating the effect of the hysteresis.

Next, the process goes to Step 41 and anneals the detected clutch stroke ST. Specifically, the CPU 41 finds a clutch stroke annealing value ST_flt based on the clutch stroke ST according to the following formula. This process results in eliminating a noise component included in the detected clutch stroke ST.

$$ST\_flt(n) = ST\_flt(n-1) + (ST(n) - ST\_flt(n-1)) \times G1$$

[n] indicates data from a current process, and [n-1] indicates data from a last process and so on. In addition, G1 is a gain experimentally found to execute this process suitably (0<G1<1).

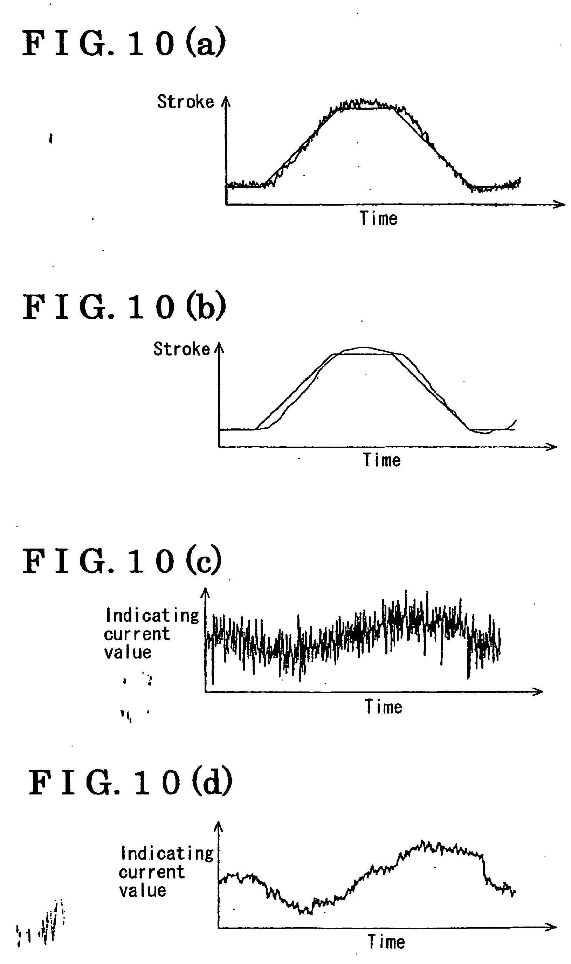

A graph in the Fig. 10 (a) shows both the target stroke and the detected actual value of clutch stroke ST. It is apparently from the graph that noise component, mainly sensor noise, is superposed on the clutch stroke ST. On the other hands, a graph in the Fig. 10 (b) shows both the target stroke and the annealed clutch stroke (clutch stroke annealing value ST_flt). It is apparent from the graph that the noise component is eliminated from the annealed clutch stroke.

Thus, estimated dispersion is eliminated and a range of the error on wear estimation becomes small.

Next, the process goes to Step 104 and anneals the motor indicating current value clti. Specifically, the CPU 41 finds the motor indicate current annealed value clti_flt based on the motor indicating current value clti according to the following formula. This process results in preventing the fluctuation of the value indicated by the CPU 41 and estimating a wear at equivalent index to each detected value.

$$clti\_flt(n) = clti\_flt(n-1) + (clti(n) - clti\_flt(n-1)) \times G2$$

G2 is a gain experimentally found to execute this process suitably (0<G2<1).

A graph in the Fig. 10 (c) shows the actual motor indicating current value clti output upon controlling to the target stroke. It is apparently from the graph that the motor indicates current value clti is fluctuated significantly upon controlling to the target stroke. On the other hands, a graph in the Fig. 10 (d) shows an annealed indicating current value (the motor indicate current annealed value clti_flt) on controlling to the target stroke. It is apparently from the graph that fluctuations of the annealed indicating current value is repressed.

Thus, estimated dispersion is eliminated and a range of the error on wear estimation becomes small.

Next, the process goes to Step 105 and executes a clutch stroke judge. Specifically, the CPU 41 judges whether or not the clutch stroke annealing value ST_flt is in a range which is more than a predetermined clutch stroke lower limit value STLL and less than a predetermined clutch stroke upper limit STUL.

The clutch stroke judge determines whether or not the clutch stroke (clutch stroke annealing value ST_flt) belongs to predetermined ranges in Fig 8 ([a] and [b]) when the clutch makes a reciprocating movement corresponding to the target clutch stroke.

In Step 105, if the clutch stroke annealing value ST_flt is not in the above ranges, the process goes to Step 112. On the other hands, If the clutch stroke annealing value ST_flt is in the range which is described above in Step 105, process goes to Step 106 and executes a calculate timer judge 1.

Specifically, the CPU 41 judges whether or not the calculate timer Tm is equal to or more than a predetermined first current monitoring start time Tm_s1 and equal to or less than a predetermined first current monitoring end time Tm_e1.

The calculate timer judge 1 determines the clutch stroke annealing value ST_flt is in the condition corresponding to the outward route if the clutch stroke annealing value ST_flt belongs to the range [a].

In other words, a period between the first current monitoring starts time Tm_s1 and the first current monitoring end time Tm_e1 is approximately corresponding a period while the clutch stroke annealing value ST_flt belongs to the range [a] on the outward route (disengaging).

In Step 106, if the clutch stroke annealing value ST_flt belongs to the range [a], the process goes to Step 107 and executes a clutch current integration value (disengaging) calculation. In other words, the CPU 41 rewrites the memory to a new clutch current integration value cltiip (disengaging) which is calculated by adding the motor indicate current annealed value clti_flt to the present clutch current integration value cltiip (disengaging).

Next, the process goes to Step 108 and executes an integration number counter (disengaging) calculation. In other words, the CPU 41 rewrites the memory to a new integration number counter (disengaging) citcntp operating increment by [1] to the present integration number counter (disengaging) cltcntp. Then, the process goes to Step 112.

If the clutch stroke annealing value ST_flt is not in the range [a], the process goes to Step 109 and executes the calculate timer judge 2.

Specifically, the CPU 41 judges whether or not the calculate timer Tm is equal to or more than a predetermined second current monitoring start time Tm_s2 and equal to or less than a predetermined second current monitoring end time Tm_e2. The calculate timer judge 2 determines the clutch stroke annealing value ST_flt is in the condition corresponding to the inward route if the clutch stroke annealing value ST_flt belongs to the range [b].

In other words, a period between the second current monitoring starts time Tm_s2 and the second current monitoring end time Tm_e2 is approximately corresponding a period while the clutch stroke annealing value ST_flt belongs to the range [b] on the inward route (engaging).

In Step 109, if the clutch stroke annealing value ST_flt belongs to the range [b], the process goes to Step 110 and executes a clutch current integration value (engaging) calculation. In other words, the CPU 41 rewrites the memory to a new clutch current integration value cltiim (engaging) which is calculated by adding the motor indicate current annealing value clti_flt to the present clutch current integration value cltiim (engaging).

Next, the process goes to Step 111 and executes an integration number counter (engaging) calculation. In other words, the CPU 41 rewrites the memory to a new integration number counter (engaging) cltcntm operating increment by [1] to the present integration number counter (engaging) cltcntm. Then, the process goes to Step 112.

In addition, if the clutch stroke annealing value ST_flt is not in the above mentioned range in the inward route (engaging) in step 109, the process goes to Step 112.

In Step 112, the CPU 41 finds an end of the measuring based on a judge whether or not the calculating timer Tm is equal to or more than a predetermined measuring end time Tm_END. The measuring end time Tm_END is a established time when the clutch has finished its reciprocally movement and indicates a time to finish the measuring process at both engaging and disengaging sides.

If the measuring process has not finished at this point, the process goes back to Step 102 and repeats the same processes (Step 102 through Step 111). If the measuring process has finished, the process goes to, Step 113 in Fig.7.

The CPU 41 finds a average clutch current value clti_ave in Step 113 summing up the clutch current integration value (disengaging) cltiip divided by the integration number counter (disengaging) cltcntp and the clutch current integration value (engaging) cltiim divided by the integration number counter (engaging) cltcntm and dividing the sum by 2. clti_ave = {(cltiip/cltcntp)+(cltiim/cltcntm)}/2

As mentioned above, finding an average of the current value on the engaging/disengaging side in these ways is for absorbing the effect of the hysteresis on the motor load. (Fig. 9 (c))

Next, the process goes to Step 114 and calculates a standard load value ST_L as a standard load value.

The standard load value ST_L equals to the average clutch current value clti_ave multiplied by a predetermined load estimating gain L_GAIN.

The load estimating gain L_GAIN is found experimentally in response to the relationship of the load (motor load) with the current value (motor indicating current value). In addition, the standard load value ST_L is also found by repeating the same process (step 101 through Step 114) more than once (e.g. three times) and averaging the standard load values. In this case, the standard load value ST_L becomes more reliable.

Next, the process goes to Step 115 and registers the standard load value ST_L to the EEPROM. Then, the CPU 41 finishes the process.

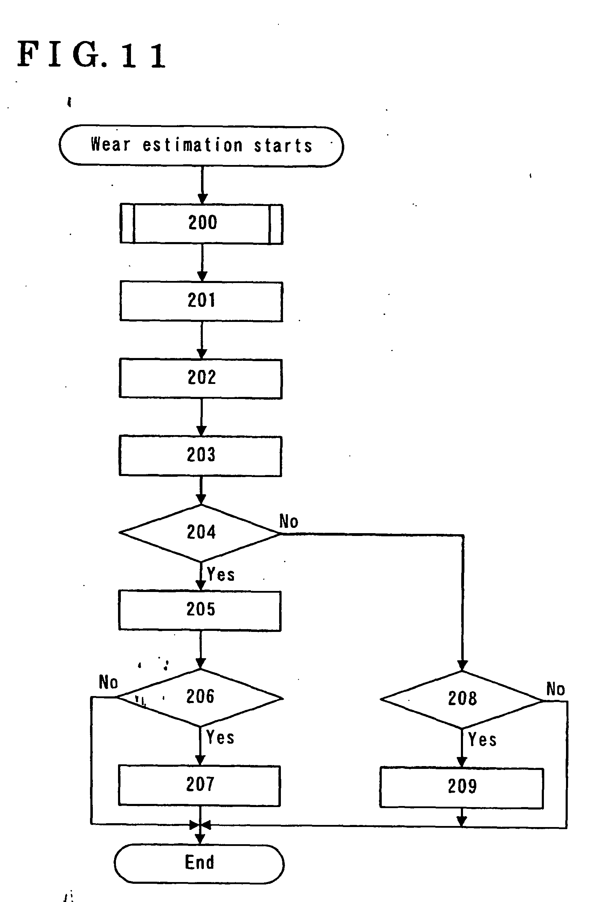

Next, a process of the wear estimation of the clutch facings 23a and 23b, which is executed when the clutch is in use after its shipment, is explained according to a flowchart in Fig. 11. The routine is executed every time the ignition switch 71 is turned off for wear estimation preventing the effect of the vehicle condition (e.g., running condition).

In addition, the CPU 41 also executes the same processes from Step 101 to Step 113 in Fig.11 before the average clutch current value calculation in the wear estimation process, in other words, Step 200 includes the common processes from Step 101 to Step 113.

Thus, once the process goes to the routine, the average clutch current value clti_ave at wear estimation is calculated through the process in Step 200 (Step 101 through Step 113).

The process goes to Step 201 after the calculation of the average clutch current value clti_ave.

In Step 201, a present load estimating value L which is corresppnding to the current load value, is calculated multiplying the average clutch current value clti_ave by the load estimating gain L_GAIN.

The process goes to Step 202 and anneals the present load estimating value L. Specifically, the CPU 41 finds a load estimating annealing value L_flt based on the present load estimating value L according to a following formula, so that the effects of disturbances on the present load estimating value L, for example a disturbance of temperature, is absorbed.

$$L\_flt(n)= L\_flt(n-1)+(L(n)-L\_flt(n-1))\times G3$$

G3 is a gain experimentally found to execute this process suitably (0<G3<1).

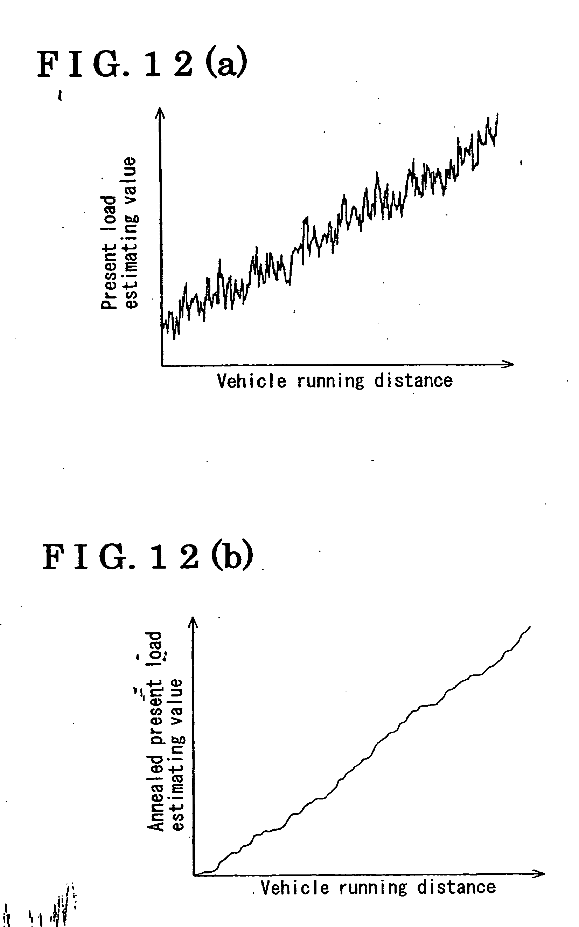

A graph in the Fig. 12 (a) shows an experimentally found relationship between a vehicle running distance and the present load estimating value L. It is apparently that dispersion is generated on each estimation of the present load estimating value L, which is affected by disturbances, for example a disturbance of temperature.
On the other hands, a graph in the Fig. 12 (b) shows an experimentally found relationship between a vehicle running distance and the annealed present load estimating value (load estimating annealing value L_flt). It is apparently that dispersion is eliminated on the annealed present load estimating value. Thus, a wear estimation becomes stable eliminating the dispersion of estimating.

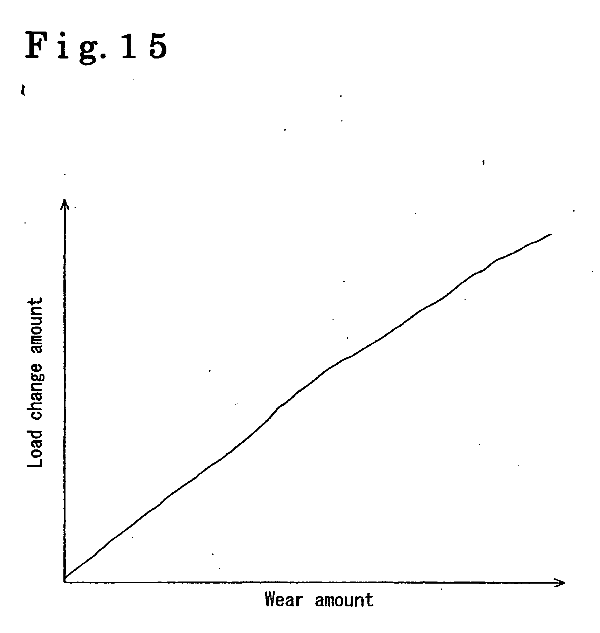

Next, the process goes to step 203 and calculating a load change amount ∆L subtracting the standard load value ST_L from the load estimating annealing value L_ flt. As shown in Fig.15, the load change amount ∆L indicates a wear amount of the clutch facings 23a and 23b(clutch disc 23).

The process goes to Step 204 after the calculation of the load change amount ∆L and judges whether or not the load change amount ∆L is equal to or more than a predetermined load change threshold value L_LTD. The load change threshold value L_LTD is an established value based on a load change amount (∆L) which is generated when a wear compensation is needed on the clutch facings 23a and 23b.
At this point, if the load change amount ∆L is equal to or more than the load change threshold value L_LTD, the CPU 41 determines that a necessity of the wear compensation to the clutch facings 23a and 23b is indicated, then the process goes to Step 205.
CPU 41 operates increment by [1] to a load judge counter adj_cnt, and then the process goes to Step 206.

In Step 206, the CPU 41 judges whether or not the load judge counter adj_cnt is equal to or more than a predetermined judge counter threshold value CNT_LTD. If the load judge counter adj_cnt is equal to or more than the judge counter threshold value CNT_LTD, the CPU 41 turns on a wear judge flag L_flag and finishes the process. In addition, if the load judge counter adj_cnt is less than the judge counter threshold value CNT_LTD, the CPU 41 finishes the processes. The wear judge flag L_flag is read by an adjust execute routine and used for a judgment whether or not the compensation movement (adjust movement) to the wear on the clutch facings 23a and 23b is need.

In Step 204, on the other hands, if the load change amount ∆L is less than the predetermined load change threshold value L_LTD, the process goes to Step 208. Then the CPU 41 judges whether or not the load judge counter adj_cnt is more than [0]. At this point, if the load judge counter adj_cnt is more than [0], the process goes to Step 209 and operates decrement by 1 to the load judge counter adj_cnt, then finishes the process. In addition, if the load judge counter adj_cnt is equal to or less than [0] in Step 208, in other words, the load judge counter adj_cnt is equal to [0], the CPU 41 finishes the processes.

Such calculation of the load judge counter adj_cnt comparing large or small between the load judge counter adj_cnt and the judge counter threshold value CNT_LTD results in eliminating a temporarily effect of the load change by executing the judgment continuously whether or not the wear compensation is needed based on the load change amount ∆L.
A graph in Fig. 13 shows a relationship in pattern diagrams between a transition of the detected load change amount ∆L and a transition of the load judge counter adj_cnt in response to the detected load change amount ∆L.
Comparing large or small between the load change amount ∆L and the predetermined load change threshold value L_LTD (wear amount), if the load change amount ∆L is more than the load change threshold value L_LTD, the load judge counter adj_cnt is counted up. On the other hands, if the load change amount ∆L is not more than the load change threshold value L_LTD, the load judge counter adj_cnt is counted down till a lower limit 0.
Thus, if the load change amount ∆L increases temporarily, the load judge counter adj_cnt is counted down immediately. In addition, if the load change amount ∆L exceeds the threshold value continuously, the count-up continues, and then the load judge counter adj_cnt exceeds the judge counter threshold value CNT_LTD.
Judging the progress of the wear in this way, a necessity of the adjust movement is determined with high reliability even if the load change amount ∆L is dispersed around the threshold value

In addition, when the clutch control (disengaging control) is executed upon shipment from the assembly plant or the wear estimation (load estimation), a control gain is used being different from a control gain of a regular clutch control. The usage of the different control gain results from the fact that the control gain of the regular clutch control is established in the most appropriate value considering followability and robust to the target value, however, the regular clutch control is not established considering an improvement of precision in the wear estimation etc. and an elimination of an operation noise.
Especially, if the clutch control on the wear estimation is executed with the same a control gain which is used in the regular clutch control, the dispersion of the wear estimation tends to be wide, and noise tend to be laud As a result, passengers find the movement noise.

Thus, when the clutch control is executed on the wear estimation, the control gain is changed to the dedicated control gain for eliminating the estimated dispersion and preventing the movement noise being getting louder.

As a result, the movement noise on the wear estimation is reduced.

Thus the wear estimation is executed without the passengers' recognition of the movement noise, and the dispersion is eliminated on the estimation.

Next, a summary of the adjust movement is explained. The adjust movement is executed if following assumptions are fulfilled.

(1) The wear judge flag L_flag turns on

(2) The friction clutch 20 is disengaged. This assumption results from the fact that the adjust movement cannot be executed when the friction clutch 20 is engaged.

(3) The engine rotation number NE is in a range between a predetermined lower limit value and a predetermined upper limit value.

This assumption bases on the fact that executing the adjust operation to disengage the clutch disc 23 is not preferable when so-called 'gear parking' wherein parking the vehicle is made while a specific transmission gear is being in engagement.

In addition, this assumption also results from preventing adjust errors by operating the adjust operation when vibration of the engine 10 is little which causes the clutch 20 not to resonate.

(4) The vehicle speed V is 0. This assumption results from preventing adjust errors caused by vibration according to vehicle driving.

When the CPU 41 fulfills these prerequisites, the actuator 30 drives and executes the adjust movement.

Specifically, the CPU 41 controls the clutch stroke ST, so that the clutch stroke ST corresponds with the target clutch stroke established being relative to a necessary amount of the adjust movement. This movement is explained as follows in reference to Fig.4.

Once the friction clutch 20 become disengaged right after the adjust movement starts, the clutch stroke ST becomes ST0.

As shown in Fig.4 (a), the predetermined distance Y is maintained between the contact portion 24b of the pressure plate 24 and the pressure plate stopper portion 22d of the clutch cover 22 in this step.

The clutch stroke ST is enhanced moreover by driving of actuator 30, so that the diaphragm spring 25 changes its style from a condition in Fig. 4(a) to a condition in Fig. 4(b).

In other words, the diaphragm spring 25 is forced toward the flywheel 21 at the power point 26a and pivots (change its style) via the supporting members 25b and 25c, and then the contact portion 24b of the pressure plate 24 and the pressure plate stopper portion 22d of the clutch cover 22 are engaged.

Then, The clutch stroke ST is enhanced moreover to the target clutch stroke established by driving of actuator 30, the diaphragm spring 25 changes its style from the condition in Fig. 4 (b) to the condition in Fig. 4 (c).

At this point, the contact portion 24b of the pressure plate 24 engages with the pressure plate stopper portion 22d of the clutch cover 22 are engaged, as a result, further movement of the pressure plate 24 is restricted.

Thus, the edge of outer peripheral surface of the diaphragm spring 25 detaches at clearance X from the tapered portion 24d of the pressure plate 24.

As shown in Fig.5, the adjusting wedge member 29 rotates by a force of the coil spring CS.

In addition, each upper portion of the tapered portion 29a of the adjusting wedge member 29 and the tapered portion 24d of the pressure plate 24 approaches and contacts each other, then a flat portion of the adjusting wedge member 29 tracks the movement of outer peripheral portion of the diaphragm spring 25. The adjust movement has finished through this step. In addition, the wear judge flag L_flag is turned off according to the termination of the adjust movement.

In this way, the distance between the diaphragm spring 25 and the pressure plate 24 is expanded by the clearance X needed amount for the adjust movement. As a result, the position of diaphragm spring 25 is relocated to an initial position (established position when the clutch disc 23 is new and not worn) when the clutch disc 23 is in perfectly engagement condition, so that the load change at the clutch operation can be reduced.

As described above, the invention has following effects;

(1) The invention enables to estimate the wear amount on the clutch disc 23 from the amount of the load change amount ($\Delta L$) which is needed to adjust the engagement condition (clutch stroke) between the clutch disc 23 and the flywheel 21 without adding an exclusive sensor.

Especially, the invention enables to estimate the wear amount on the clutch disc 23 without increasing costs using the existing signal value.

(2) The invention enables to estimate the wear amount on the clutch disc 23 near the complete engaging point wherein the load change amount which is needed to adjust the engagement condition (clutch stroke) between the clutch disc 23 and the flywheel 21 becomes approximately maximum. Thus, the wear estimation becomes accurate eliminating the dispersion of the estimation.

(3) The invention enables to estimate the wear amount of the clutch disc 23 eliminating the dispersion of the estimation based on the average value of the each load change amount (average clutch current value clti_ave) which is needed to adjust the engagement condition (clutch stroke) between the clutch disc 23 and the flywheel 21 within the predetermined range.

(4) The invention enables to estimate the wear amount of the clutch disc 23 eliminating the effect of the hysteresis based on the average value of the each load change amount (average clutch current value clti_ave) which is needed to adjust the engagement condition between the clutch disc 23 and the flywheel 21 in the both direction of engagement/disengagement conditions.

(5) The invention enables to estimate the wear amount of the clutch disc 23 stably eliminating the dispersion of the estimation based on the annealed load change amount (load estimating annealing value L_flt).

(6) The invention enables to estimate the wear amount on the clutch disc 23 with high reliability according to the load change amount ($\Delta L$) on the basis of a load which is needed to adjust the engagement condition between the clutch disc 23 and the flywheel 21 (clutch stroke) in the assembling initial condition.

(7) The estimated number of a wear amount which exceeds the predetermined amount ($\Delta L \geq L\_LTD$) is calculated in the invention, and if the calculated value (load judge counter adj_cnt) exceeds the predetermined value (judge counter threshold value CNT_LTD), the CPU finds progression of the ,wear on the clutch disc 23.

Thus, the invention enables to eliminate judge errors on the wear progress even if the estimated wear amount (load change amount $\Delta L$) is dispersed near the threshold value (L_LTD).

(8) The invention enables to estimate the load change amount based on the motor load of the electric motor 32.

(9) The invention enables to estimate the motor load, in other words, the load change amount, with the simple arithmetic expression by making the rotation speed of the electric motor 32 constant.

(10) The invention enables to estimate the load change value which eliminates the noise and has few errors based on the moving position of the annealed electric motor 32 (clutch stroke ST) and the average value of the motor indicating current value clti.

(11) The invention enables to estimate the load change amount changing the engagement condition between the clutch disc 23 and the flywheel 21 with a control gain which is switched from the regular gain.

Thus the invention enables avoid lowering the estimating accuracy of the load change amount diverting the regular gain considering of the followability and the robust for the target value.

(12) For example, there is no effect of the individual dispersion and the constant change, which is identical with the case when the wear amount is estimated comparing the stop position (clutch stroke) when the actuator 30 (the electric motor 32) is driven in a predetermined condition (constant currency, feeding in constant time etc.) and the stop position upon shipment from the assembly plant.

In addition, embodiments of the invention are not limited to the embodiments as described above and allowed to change as follows.

In the adjust movement of the embodiments, the edge of outer peripheral surface of the diaphragm spring 25 detaches at clearance X from the tapered portion 24d of the pressure plate 24, and the adjusting wedge member 29 is rotated by the force of the coil spring CS.

Thus the upper portion of the tapered portion 29a of the adjusting wedge member 29 and the upper portion of the tapered portion 24d of the pressure plate 24 are contacted intermittently at each upper portion, so that the wear of the clutch facings 23a and 23b is compensated.

An intermitted rotation feature may be established, which allows a rotation movement of the adjusting wedge member 29 in steps of predetermined rotation angle.

In this case, the wear compensation will be executed establishing the off and on higher contact of the tapered portion 29a of the adjusting wedge member 29 and the tapered portion 24d of the pressure plate 24.

As a result, the invention can avoid error adjustments at the adjust movement and excessive fine adjustments.

In the above embodiments, the load change amount is estimated using the motor indicating current value clti as a motor current value. On the other hand, the load change amount is estimated, for example, using a detected value on the established current sensor.

In the above embodiments, if it is possible to detect directly a load when the clutch disc 23 and the flywheel 21 are engaged, the wear amount of the clutch disc 23 may be estimated using the detected load.

In the above embodiments, there is no preference whether the clutch control circuit 40 and the actuator 30 are integrated or disintegrated.

Having now fully described the invention, it will be apparent to one of ordinary skill in the art that many changes and modifications can be made without departing from the scope of the invention as set forth in the appended claims.

**Claims**

1. A clutch control device comprising a friction clutch (20) which includes a flywheel (21) rotating together with an output shaft (10a) of a driving source (10) and a clutch disc (23) disposed opposite the flywheel, an actuator (30) for generating a load for controlling an engaging relationship between the clutch disc and the flywheel, and an estimation means for estimating a wear amount of a clutch facing (23a, 23b) provided at the clutch disc; **characterized in that**

    the estimation means controls the actuator so that a clutch stroke is increased from a complete engaging point (θ) to a predetermined maximum target clutch stroke (Stmax) and the clutch stroke is decreased from the predetermined maximum target clutch stroke to the complete engaging point,
    the predetermined maximum target clutch stroke is near the complete engaging point and the clutch disc rotates integrally with the flywheel under the condition that the clutch disc approximately completely engages with the flywheel at the predetermined maximum target clutch stroke,
    the estimation means measures each load of the actuator in predetermined ranges of the clutch stroke near the complete engaging point, wherein a range of load change is largest, in engaging and disengaging directions, and measures an each average load of the actuator (cltiip/cltcntp, cltiim/cltcontm) in the engaging and disengaging directions, and
    the estimation means estimates the wear amount of the clutch disc based on an average value (clti-ave) of the each average load of the actuator.

2. A clutch control device according to claim 1, wherein the predetermined clutch stroke is a range between a predetermined clutch stroke lower limit value (STLL) and a predetermined clutch stroke upper limit (STUL).

3. A clutch control device according to claims 1 or 2, wherein the estimation means estimates the wear amount of the clutch facing (23a, 23b) based on a processed load change value.

4. A clutch control device according to any of claim 1 through claim 3, wherein the estimation means compares the load change amount with a predetermined judge threshold, counts a number of times the load change amount exceeds the predetermined judge threshold, and judges a wear on the clutch disc (23) when the number of times is larger than a predetermined number.

5. A clutch control device according to any of claim 1 through claim 4, wherein the actuator includes an electric motor (32) and the estimation means estimates the wear amount of the clutch disc (23) by estimating the load change amount based on a motor load of the electric motor (32).

6. A clutch control device according to claim 5, wherein the estimation means estimates the load change amount based on an average value of the motor current value when the engaging condition between the clutch disc (23) and the flywheel (21) is adjusted within a predetermined range on the condition that a rotation speed of the electric motor (32) is controlled constantly.

7. A clutch control device according to claim 5, wherein a detection means is provided for detecting an operation position of the electric motor (32) relative to the engaging condition of the clutch disc (23) and the flywheel (21), and the estimation means estimates the load change amount based on the average value of a processed motor current value when a position of operating a process is provided by a processing the detected operating position is within a predetermined range.

8. A clutch control device according to claim 5 or 6, wherein the estimation means adjusts the engaging condition between the clutch disc (23) and the flywheel (21) with a control gain which is switched from a regular control gain.

**EP 1 384 912 B1**

**Patentansprüche**

1. Kupplungssteuervorrichtung mit einer Reibungskupplung (20), die ein Schwungrad (21), das zusammen mit einer Ausgangswelle (10a) einer Antriebsquelle (10) dreht, und eine Kupplungsscheibe (23) hat, die gegenüberliegend zu dem Schwungrad angeordnet ist, einem Stellglied (30) zum Generieren einer Last zum Steuern einer Eingriffsbeziehung zwischen der Kupplungsscheibe und dem Schwungrad sowie einer Abschätzeinrichtung zum Abschätzen eines Verschleißbetrags eines Kupplungsbelags (23a, 23b), der an der Kupplungsscheibe vorgesehen ist; **dadurch gekennzeichnet, dass**

die Abschätzeinrichtung das Stellglied steuert, so dass ein Kupplungshub von einem Punkt eines vollständigen Eingriffs (θ) zu einem vorgegebenen maximalen Sollkupplungshub (Stmax) erhöht ist und der Kupplungshub von dem vorgegebenen maximalen Sollkupplungshub zu dem Punkt des vollständigen Eingriffs verringert ist, der vorgegebene maximale Sollkupplungshub nahe dem Punkt des vollständigen Eingriffs ist und die Kupplungsscheibe integral mit dem Schwungrad unter der Bedingung dreht, dass die Kupplungsscheibe annähernd vollständig mit dem Schwungrad bei dem vorgegebenen maximalen Sollkupplungshub eingreift,
die Abschätzeinrichtung jede Last des Stellglieds in vorgegebenen Bereichen des Kupplungshubs nahe des Punkts des vollständigen Eingriffs, bei dem ein Bereich einer Laständerung am größten ist, in eine Eingriffsrichtung und eine Ausrückrichtung misst, und jede durchschnittliche Last des Stellglieds (cltiip/cltcntp, cltiim/cltcontm) in die Eingriffsrichtung und die Ausrückrichtung misst, und
die Abschätzeinrichtung den Verschleißbetrag der Kupplungsscheibe auf der Grundlage eines durchschnittlichen Werts (clti_ave) der durchschnittlichen Last des Stellglieds abschätzt.

2. Kupplungssteuervorrichtung nach Anspruch 1, wobei der vorgegebene Kupplungshub ein Bereich zwischen einem vorgegebenen unteren Grenzwert des Kupplungshubs (STLL) und einem vorgegebenen oberen Grenzwert des Kupplungshubs (STUL) ist.

3. Kupplungssteuervorrichtung nach einem der Ansprüche 1 oder 2, wobei die Abschätzeinrichtung den Verschleißbetrag des Kupplungsbelags (23a, 23b) auf der Grundlage eines verarbeiteten Laständerungswerts abschätzt.

4. Kupplungssteuervorrichtung nach einem der Ansprüche 1 bis 3, wobei die Abschätzeinrichtung den Laständerungsbetrag mit einem vorgegebenen Beurteilungsschwellwert vergleicht, eine Zahl der Male zählt, die der Laständerungsbetrag den vorgegebenen Schwellwert überschreitet, und einen Verschleiß der Kupplungsscheibe (23) beurteilt, wenn die Zahl an Malen größer als eine vorgegebene Zahl ist.

5. Kupplungssteuervorrichtung nach einem der Ansprüche 1 bis 4, wobei das Stellglied einen Elektromotor (32) hat und die Abschätzeinrichtung den Verschleißbetrag der Kupplungsscheibe (23) durch Abschätzen des Laständerungsbetrags auf der Grundlage einer Motorlast des Elektromotors (32) abschätzt.

6. Kupplungssteuervorrichtung nach Anspruch 5, wobei die Abschätzeinrichtung den Laständerungsbetrag auf der Grundlage eines durchschnittlichen Werts des Motorstromwerts abschätzt, wenn die Eingriffsbedingung zwischen der Kupplungsscheibe (23) und dem Schwungrad (21) innerhalb eines vorgegebenen Bereichs bei der Bedingung eingestellt wird, dass eine Drehzahl des Elektromotors (32) konstant gesteuert wird.

7. Kupplungssteuervorrichtung nach Anspruch 5, wobei eine Erfassungseinrichtung zum Erfassen einer Betriebsposition des Elektromotors (32) relativ zu der Eingriffsbedingung der Kupplungsscheibe (23) und dem Schwungrad (21) vorgesehen ist und die Abschätzeinrichtung den Laständerungsbetrag auf der Grundlage des durchschnittlichen Werts eines verarbeiteten Motorstromwerts abschätzt, wenn eine Position eines Betreibens eines Prozesses, die durch ein Verarbeiten der erfassten Betriebsposition vorgesehen ist, innerhalb eines vorgegebenen Bereichs ist.

8. Kupplungssteuervorrichtung nach Anspruch 5 oder 6, wobei die Abschätzeinrichtung die Eingriffsbedingung zwischen der Kupplungsscheibe (23) und dem Schwungrad (21) mit einer Steuerverstärkung einstellt, die von einer regulären Steuerverstärkung umgeschaltet wird.

**Revendications**

1. Dispositif de commande pour embrayage comprenant un embrayage à friction (20) qui comprend un volant (21)

13

tournant conjointement avec un arbre de sortie (10a) d'une source d'entraînement (10) et un disque d'embrayage (23) disposé de manière opposée au volant, un actionneur (30) destiné à générer une charge pour commander une relation de mise en prise entre le disque d'embrayage et le volant, et un moyen d'estimation destiné à estimer une quantité d'usure d'une garniture d'embrayage (23a, 23b) prévu au niveau du disque d'embrayage ;

**caractérisé en ce que**

le moyen d'estimation commande l'actionneur de sorte qu'une course d'embrayage est augmentée d'un point de mise en prise complète (θ) à une course d'embrayage cible maximale prédéterminée (Stmax) et de sorte que la course d'embrayage est diminuée de la course d'embrayage cible maximale prédéterminée au point de mise en prise complète,

la course d'embrayage cible maximale prédéterminée se trouve près du point de mise en prise complète et le disque d'embrayage tourne solidairement avec le volant à condition que le disque d'embrayage se mette approximativement complètement en prise avec le volant au niveau de la course d'embrayage cible maximale prédéterminée,

le moyen d'estimation mesure chaque charge de l'actionneur dans des plages prédéterminées de la course d'embrayage près du point de mise en prise complète, dans lequel une plage de changement de charge est la plus importante, dans les sens d'embrayage et de débrayage, et mesure une charge moyenne de l'actionneur (cltiip/cltcntp, cltiim/cltcontm) dans les sens d'embrayage et de débrayage, et

le moyen d'estimation estime la quantité d'usure du disque d'embrayage en se basant sur une valeur moyenne (clti_ave) de chaque charge moyenne de l'actionneur.

2. Dispositif de commande pour embrayage selon la revendication 1, dans lequel la course d'embrayage prédéterminée est une plage comprise entre une valeur limite inférieure de course d'embrayage prédéterminée (STLL) et une limite supérieure de course d'embrayage prédéterminée (STUL).

3. Dispositif de commande pour embrayage selon la revendication 1 ou 2, dans lequel le moyen d'estimation estime la quantité d'usure de la garniture d'embrayage (23a, 23b) en se basant sur une valeur de changement de charge traitée.

4. Dispositif de commande pour embrayage selon l'une quelconque des revendications 1 à 3, dans lequel le moyen d'estimation compare la quantité de changement de charge à un seuil de jugement prédéterminé, compte un nombre de fois que la quantité de changement de charge a dépassé le seuil de jugement prédéterminé, et juge une usure sur le disque d'embrayage (23) lorsque le nombre de fois est supérieur à un nombre prédéterminé.

5. Dispositif de commande pour embrayage selon l'une quelconque des revendications 1 à 4, dans lequel l'actionneur comprend un moteur électrique (32) et le moyen d'estimation estime la quantité d'usure du disque d'embrayage (23) en estimant la quantité de changement de charge sur la base d'une charge de moteur du moteur électrique (32).

6. Dispositif de commande pour embrayage selon la revendication 5, dans lequel le moyen d'estimation estime la quantité de changement de charge sur la base d'une valeur moyenne de la valeur de courant du moteur lorsque la condition de mise en prise entre le disque d'embrayage (23) et le volant (21) est ajustée à l'intérieur d'une plage prédéterminée à condition qu'une vitesse de rotation du moteur électrique (32) soit commandée de manière constante.

7. Dispositif de commande pour embrayage selon la revendication 5, dans lequel un moyen de détection est prévu pour détecter une position de fonctionnement du moteur électrique (32) par rapport à la condition de mise en prise du disque d'embrayage (23) et du volant (21), et le moyen d'estimation estime la quantité de changement de charge en se basant sur la valeur moyenne d'une valeur de courant de moteur traitée lorsqu'une position consistant à actionner un traitement est procurée en traitant la position de fonctionnement détectée qui se trouve à l'intérieur d'une plage prédéterminée.

8. Dispositif de commande pour embrayage selon la revendication 5 ou 6, dans lequel le moyen d'estimation ajuste la condition de mise en prise entre le disque d'embrayage (23) et le volant (21) avec un gain de commande qui est commuté depuis un gain de commande régulier.

# FIG. 1

EP 1 384 912 B1

# FIG. 2

# F I G. 3

# FIG. 4 (a)

# FIG. 4 (b)

# FIG. 4 (c)

# FIG. 5

Clearance X    29a    Rotation    29    CS    29b

CS

24    24e    24d    TP

EP 1 384 912 B1

FIG. 6

```
        ( Standard value detection starts )
                        │
                        ▼
               ┌─────────────────┐
               │║      101      ║│
               └─────────────────┘
                        │
          ┌────────────►│
          │             ▼
          │    ┌─────────────────┐
          │    │      102        │
          │    └─────────────────┘
          │             │
          │             ▼
          │    ┌─────────────────┐
          │    │      103        │
          │    └─────────────────┘
          │             │
          │             ▼
          │    ┌─────────────────┐
          │    │      104        │
          │    └─────────────────┘
          │             │
          │    No        ▼
          │  ◄───────<   105   >
          │             │
          │            Yes
          │             ▼                  No
          │         <   106   >─────────────────────┐
          │             │                           │
          │            Yes                          ▼
          │    ┌─────────────────┐          <   109   >──── No ──┐
          │    │      107        │              │               │
          │    └─────────────────┘             Yes              │
          │             │              ┌─────────────────┐      │
          │    ┌─────────────────┐     │      110        │      │
          │    │      108        │     └─────────────────┘      │
          │    └─────────────────┘              │               │
          │             │              ┌─────────────────┐      │
          │             │              │      111        │      │
          │             │              └─────────────────┘      │
          │             │                       │               │
          │             ▼◄──────────────────────┴───────────────┘
          │    No        │
          └────────<   112   >
                        │
                       Yes
                        ▼
                      ( 1 )
```

# F I G. 7

```
    ( 1 )
      │
      ▼
  ┌─────────┐
  │   113   │
  └─────────┘
      │
      ▼
  ┌─────────┐
  │   114   │
  └─────────┘
      │
      ▼
  ┌─────────┐
  │   115   │
  └─────────┘
      │
      ▼
  (   End   )
```

# FIG. 8

# F I G. 9 (a)

Stroke / Time

# F I G. 9 (b)

Current value / Time

# F I G. 9 (c)

Current value / Stroke

Average current value

# FIG. 10 (a)

Stroke ↑

Time

# FIG. 10 (b)

Stroke ↑

Time

# FIG. 10 (c)

Indicating
current
value

Time

# FIG. 10 (d)

Indicating
current
value

Time

# F I G. 1 1

```
        ( Wear estimation starts )
                  |
                 200
                  |
                 201
                  |
                 202
                  |
                 203
                  |
                 204 ──No──┐
                  |Yes      |
                 205        |
                  |         |
   No── 206              208 ──No
          |Yes            |Yes
         207             209
          |               |
          └──────┬────────┘
              ( End )
```

# FIG. 12 (a)

Present load estimating value vs. Vehicle running distance

# FIG. 12 (b)

Annealed present load estimating value vs. Vehicle running distance

# FIG. 13(a)

Load change
threshold value

# FIG. 13(b)

Judge counter
threshold value

# FIG. 14

Wear
condition

Initial
condition

Load value

0
(complete engagement point)

Clutch stroke

# Fig. 15

Load change amount / Wear amount

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0053945 A